# FASCICULE DE BREVET EUROPEEN

(11) **EP 3 697 848 B1**
(45) Date de publication et mention de la délivrance du brevet: **29.04.2026**
(21) Numéro de dépôt: 18793628.1
(22) Date de dépôt: 19.10.2018
(51) Int. Cl.: C08L 89/00, C08H 1/00, C08J 5/00

(54) **PROCÉDÉ DE FABRICATION D'UNE PIÈCE A PARTIR D'UN MATÉRIAU NATUREL PARTICULAIRE ET PIÈCE OBTENUE PAR UN TEL PROCÉDÉ**
VERFAHREN ZUR HERSTELLUNG EINES TEILS AUS EINEM TEILCHENFÖRMIGEN NATÜRLICHEN MATERIAL UND NACH DIESEM VERFAHREN HERGESTELLTES TEIL
METHOD FOR PRODUCING A PART FROM A PARTICULATE NATURAL MATERIAL AND PART OBTAINED BY SUCH A METHOD

(30) Priorité: 20.10.2017 FR 1759886
(43) Date de publication de la demande: 26.08.2020
(73) Titulaire: Authentic Material, 31120 Portet-sur-Garonne (FR); Toulouse Tech Transfer, 31432 Toulouse Cedex 4 (FR); Institute National Polytechnique de Toulouse, B.P. 34 038 31029 Toulouse Cedex 4 (FR); Centre National de la Recherche Scientifique, 75016 Paris (FR); Institut national de recherche pour l'agriculture, l'alimentation et l'environnement, 75007 Paris (FR)
(72) Inventeur: MENNY, Vincent, 31120 Portet sur Garonne (FR); ROUILLY, Antoine, 31400 Toulouse (FR); COURET, Alain, 09700 Saverdun (FR); MAZARS, Dimitri, 31450 Belberaud (FR); NEUMEYER, David, 31520 Ramonville Saint Agne (FR); VANDENBOSSCHE, Virginie, 31570 Sainte-Foy-d'Aigrefeuille (FR); MONCHOUX, Jean, 31500 Toulouse (FR); NAIMI, Foad, 21150 Venarey les Laumes (FR)
(74) Mandataire: Santarelli
(86) Numéro de dépôt international: PCT/EP2018/078717
(87) Numéro de publication internationale: WO 2019/077112

(56) Documents cités:
- WO-A1-01/66159
- WO-A1-2012/069736
- WO-A2-2007/101171
- KR-A- 20100 042 182
- KR-B1- 100 825 085
- KR-B1- 100 849 020
- US-A1- 2016 375 176
- US-A1- 2017 112 963
- LAMBRI MELANIA LUCILA ET AL: "Denaturation processes of collagen from cow bones as a function of temperature", MATÉRIA (RIO DE JANEIRO), vol. 23, no. 2, 19 July 2018 (2018-07-19), XP093099747, DOI: 10.1590/s1517-707620180002.0424
- SURAJ SHARMA ET AL: "Water Aided Fabrication of Whey and Albumin Plastics", JOURNAL OF POLYMERS AND THE ENVIRONMENT ; FORMERLY: 'JOURNAL OF ENVIRONMENTAL POLYMER DEGRADATION', KLUWER ACADEMIC PUBLISHERS-PLENUM PUBLISHERS, NE, vol. 20, no. 3, 5 July 2012 (2012-07-05), pages 681 - 689, XP035112387, ISSN: 1572-8900, DOI: 10.1007/S10924-012-0504-8

## Description

La présente invention s'inscrit dans le domaine de la valorisation des résidus protéiques d'origine animale.

Plus particulièrement, la présente invention concerne un procédé de fabrication d'une pièce à partir d'un matériau naturel sous forme particulaire contenant des scléroprotéines.

L'épuisement programmé des ressources fossiles incite depuis plusieurs années les industriels à développer des solutions de remplacement mettant en œuvre des ressources renouvelables, et ce dans tous les domaines de l'industrie. Le recyclage et la valorisation des déchets d'origine animale ou végétale revêtent à ce titre un intérêt croissant, tant du point de vue économique qu'environnemental.

Il a ainsi été proposé par l'art antérieur de fabriquer des matériaux solides à partir des déchets d'origine animale ou végétale, en particulier par un procédé de moulage à chaud et à haute pression de ces déchets.

Un exemple d'un tel procédé est décrit dans le document WO 2012/069736, pour la fabrication d'un matériau solide à partir d'une matière organique d'origine végétale contenant des polysaccharides ou des polypeptides.

Le document US 2016/0375176 décrit un procédé de fabrication d'un matériau composite à base de collagène minéralisé, pour le cimentage osseux.

Les présents inventeurs se sont plus particulièrement intéressés aux matières premières naturelles d'origine animale non humaine, et notamment à base d'un type de protéines particulier, les scléroprotéines.

Les scléroprotéines, autrement nommées protéines fibreuses, constituent l'une des trois principales classes de protéines animales. Il s'agit de longues molécules en forme de filaments, jouant un rôle structurel et constitutif dans l'organisme, et entrant dans la composition des tissus dits de soutien, tels que les os et les tissus conjonctifs, ainsi que des phanères, tels que la peau, les poils, les cornes, les sabots et les ongles. Il en existe différents types : les kératines, qui forment des tissus protecteurs du corps, tels que l'épiderme, les poils, les ongles, les sabots, les cornes ou les plumes des oiseaux ; les collagènes, qui constituent des tissus conjonctifs, tels que des cartilages ; la conchyoline, qui forme les coquilles des mollusques ; et les élastines, également présentes dans les tissus conjonctifs.

De nombreux déchets industriels issus de l'élevage, tels que la corne, les plumes, le cuir, ou rebuts de production, tels que les chutes générées lors du travail du cuir ou du travail de la corne, etc., sont principalement constitués de scléroprotéines. L'utilisation de ces déchets pour la fabrication de pièces en matériau massif, destinées à des applications multiples et variées tirant profit des propriétés esthétiques et mécaniques de ces matériaux naturels, en permettrait une valorisation tout à fait intéressante, sur le plan économique comme environnemental.

A l'origine de la présente invention, il a été découvert par les présents inventeurs qu'un procédé de traitement par compression à haute température des matériaux naturels sous forme particulaire à base de scléroprotéines, tels que des matériaux à base de cuir ou de corne animale par exemple, ce procédé étant mis en œuvre dans des conditions opératoires spécifiques, permet de former des pièces massives en une matière présentant des propriétés mécaniques particulièrement avantageuses, notamment une bonne cohésion, une structuration homogène, une bonne stabilité tant physique qu'esthétique, et présentant un faible degré d'hygroscopie.

Ainsi, la présente invention vise à proposer un procédé de fabrication d'une pièce à partir d'un matériau naturel sous forme particulaire à base de scléroprotéines, qui permette d'obtenir une matière solide reproduisant les propriétés du matériau naturel initial, et même améliorant certaines de ces propriétés.

Un objectif supplémentaire de l'invention est que ce procédé soit simple et rapide à mettre en œuvre.

On entend dans la présente description, par matériau naturel, un matériau d'origine naturelle, tel qu'un matériau d'origine animale, par opposition aux matériaux synthétiques. Le matériau naturel selon l'invention peut être un matériau existant dans la nature, ou un matériau obtenu par transformation d'un tel matériau existant dans la nature, par exemple par tannage, pour former du cuir, du matériau naturel qu'est la peau d'un animal.

A l'effet d'atteindre les objectifs ci-dessus, il est proposé selon la présente invention un procédé de fabrication d'une pièce, sous forme d'un bloc solide, à partir d'un matériau naturel sous forme particulaire contenant des scléroprotéines. Ce procédé comprend les phases suivantes, réalisées à sec :
- une phase de chauffage dudit matériau naturel sous compression à une pression supérieure ou égale à 30 MPa, à une température supérieure ou égale à la température de dénaturation des scléroprotéines entrant dans la constitution de ce matériau,
- et une phase de refroidissement du matériau ainsi obtenu, dit matériau dénaturé, jusqu'à une température inférieure à 100 °C.

La compression à une pression supérieure ou égale à 30 MPa est maintenue pendant au moins une partie de cette phase de refroidissement, de préférence pendant au moins la partie initiale de cette phase de refroidissement, notamment pendant au moins la moitié de la phase de refroidissement.

Préférentiellement, la compression est maintenue pendant toute la phase de refroidissement.

Le refroidissement peut être réalisé de toute manière, par exemple par dissipation de chaleur à l'air ambiant.

Typiquement, le matériau auquel est appliqué le procédé selon l'invention, d'origine naturelle, contient plus de 50 % en poids de scléroprotéines, les scléroprotéines étant sensiblement le seul type de protéines qui y sont présentes.

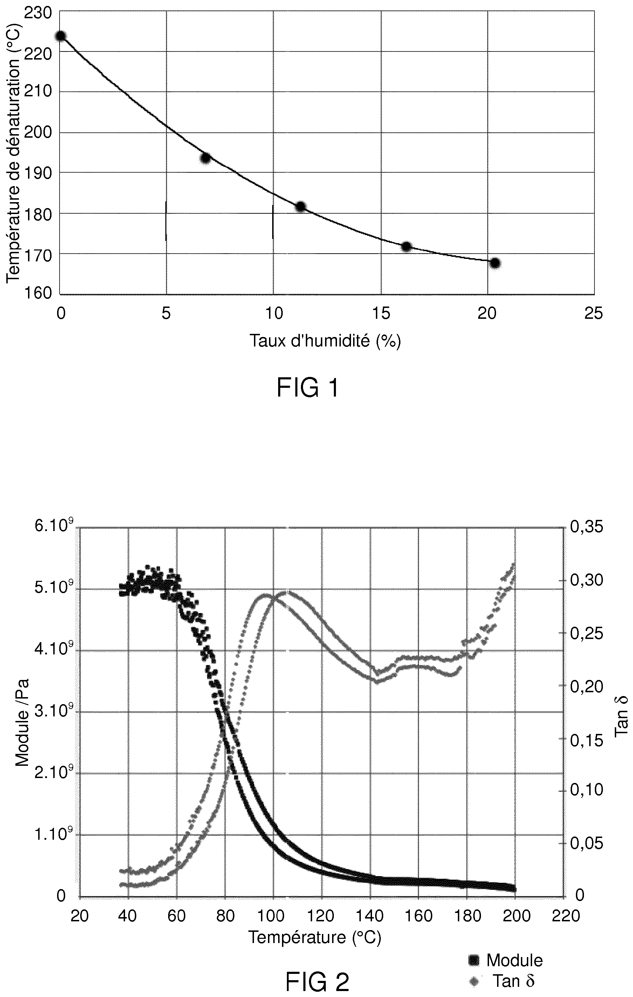

Il entre dans les compétences de l'homme du métier de déterminer, pour un matériau naturel initial donné, quelle est la température de dénaturation des scléroprotéines qui entrent dans sa constitution, dans les conditions de pression appliquées dans le dispositif mis en œuvre. Cette température dépend notamment du taux d'humidité du matériau. A cet effet, l'homme du métier pourra notamment procéder à une analyse du matériau initial par une technique connue en elle-même pour la mesure de ce paramètre, par exemple par la technique de calorimétrie différentielle à balayage (DSC), selon un mode opératoire classique. Connaissant le taux d'humidité du matériau sur lequel il souhaite mettre en œuvre le procédé selon l'invention, l'homme du métier pourra autrement se référer, pour connaitre la température de dénaturation des scléroprotéines, à un abaque préétabli, notamment par analyses par DSC d'échantillons de ce matériau présentant différents taux d'humidité, tel que l'abaque montré sur la figure 1 ci-jointe.

Le chauffage du matériau naturel à une température supérieure ou égale à la température de dénaturation des scléroprotéines y provoque un changement de phase dans les zones organisées de ces protéines, notamment les zones à structure à hélice(s) α et/ou feuillet(s) β, et une perte de structure dans ces zones organisées. La déformabilité du matériau augmente en conséquence. Ce faisant, la compression exercée sur le matériau conformément à l'invention permet avantageusement d'éviter que de l'eau ne s'accumule dans des pores du matériau.

La phase de chauffage est par ailleurs avantageusement réalisée à une température qui reste inférieure à la température de dégradation des scléroprotéines. Les performances mécaniques de la matière obtenue à l'issue du procédé en sont avantageusement meilleures. Il entre dans les compétences de l'homme du métier de savoir déterminer cette température de dégradation. A cet effet, il pourra notamment réaliser une analyse thermogravimétrique (ATG) d'un échantillon du matériau naturel, de manière classique en elle-même.

Le matériau dit dénaturé obtenu à l'issue de la phase de chauffage est ensuite refroidi, toujours sous compression, jusqu'à une température inférieure à 100 °C, assurant que le matériau dénaturé ne contienne plus d'eau à l'état gazeux.

Préférentiellement, le matériau dénaturé est refroidi jusqu'à une température inférieure à sa température de transition vitreuse. Cette température de transition vitreuse peut aisément être déterminée par l'homme du métier, au moyen de toute technique connue à cet effet, par exemple par analyse mécanique dynamique (DMA), réalisée sur un échantillon du matériau dénaturé.

En dessous de sa température de transition vitreuse, le matériau obtenu repasse, de manière classique en elle-même, à l'état vitreux, non déformable. Le démoulage de la pièce fabriquée par le procédé selon l'invention est alors avantageusement facilité.

Préférentiellement, la phase de refroidissement est réalisée le plus rapidement possible, en fonction de ce que permet l'appareillage utilisé pour la mise en œuvre du procédé selon l'invention.

Le procédé selon la présente invention est réalisé à sec. Il ne met avantageusement en œuvre aucun solvant. On entend par là que le matériau naturel est soumis aux phases du procédé selon l'invention à l'état solide, et non en solution ou suspension dans un liquide. Selon l'invention le matériau peut cependant présenter un taux d'humidité très important, voire être entièrement imprégné d'eau.

On obtient à l'issue du procédé selon l'invention une pièce formée d'un bloc de matière solide présentant l'aspect esthétique du matériau naturel de départ, avantageusement compact et densifié, et présentant une bonne cohésion et une bonne solidité, de structuration homogène, physiquement et esthétiquement stable. Cette matière présente en outre une hygroscopie plus faible, et une densité plus élevée, que celles du matériau naturel de départ. Cette densification confère à la matière de la pièce obtenue des propriétés mécaniques améliorées, notamment une bonne résistance mécanique et une faible déformabilité, ainsi qu'une meilleure tenue à l'humidité que le matériau naturel initial. La pièce obtenue présente en outre un module de flexion et un module de traction similaires, voire meilleurs, à ceux du matériau naturel initial.

La pièce obtenue par le procédé selon l'invention est en particulier bien plus dense que les pièces obtenues par des procédés similaires, mais dans lesquels la compression n'est pas maintenue pendant la phase de refroidissement, ou bien dans lesquels la phase de chauffage est réalisée à une température inférieure à la température de dénaturation des scléroprotéines contenues dans le matériau naturel initial.

La matière constituant cette pièce présente un degré de déformabilité qui peut avantageusement être contrôlé, par un choix adéquat des paramètres opératoires du procédé et du taux d'humidité initial du matériau naturel. En particulier, l'eau éventuellement présente dans le matériau naturel initial joue un rôle de plastifiant qui permet, à l'issue de la phase de chauffage, aux chaînes des scléroprotéines dénaturées présentes dans la matière de glisser les unes sur les autres, ce qui renforce la déformabilité de la matière obtenue.

Le procédé selon l'invention, simple et rapide à mettre en œuvre, permet en outre de maîtriser les propriétés de la matière finale, notamment par ajout d'additifs adéquats au matériau naturel initial en amont de la phase de chauffage.

Il permet en outre de maîtriser parfaitement la forme et les dimensions de la pièce formée, si bien qu'il est possible de fabriquer des pièces adaptées pour toutes les applications souhaitées.

A cet effet, le procédé selon l'invention peut être mis en œuvre par compression du matériau initial sous forme particulaire contenu dans un moule de forme et dimensions adéquates et mise en œuvre de la phase de chauffage, puis de la phase de refroidissement, sur le matériau contenu dans ce moule. Un tel moule est classique en lui-même. Il peut par exemple être formé en acier, en graphite, en carbure de tungstène ou en silicone.

Autrement, le procédé selon l'invention peut comprendre une étape préalable de préformage à froid du matériau naturel sous forme particulaire, pour former une préforme solide qui est ensuite soumise à la phase de chauffage, puis à la phase de refroidissement, sous compression, du procédé selon l'invention.

Le procédé selon l'invention peut en outre répondre à l'une ou plusieurs des caractéristiques décrites ci-après, mises en œuvre isolément ou en chacune des leurs combinaisons techniquement opérantes.

Dans des modes de mise en œuvre particuliers de l'invention, la phase de chauffage du matériau naturel est réalisée par frittage flash. La phase de refroidissement est réalisée dans le même dispositif de frittage flash, sans aucune manipulation intercalaire du matériau qui y est contenu.

La technique de frittage flash (dite SPS, pour l'anglais «Spark Plasma Sintering ») est bien connue de l'homme du métier. Elle consiste à faire passer un courant électrique pulsé à travers une matrice en matériau électriquement conducteur, contenant le matériau pulvérulent compacté selon une direction uniaxiale. Ceci provoque le chauffage du matériau par effet Joule et conduction électrique et thermique.

Dans le cadre du procédé selon l'invention, cette technique peut être mise en œuvre dans un dispositif de frittage flash classique en lui-même, et selon des conditions opératoires également classiques en elles-mêmes. L'outillage utilisé peut par exemple consister en des matrices et pistons en graphite, mais tout autre matériau conducteur d'électricité, notamment l'acier, est également adapté.

La mise en œuvre conformément à l'invention de la technique de frittage flash permet d'obtenir une matière finale particulièrement dense, de structure particulièrement homogène et présentant des propriétés mécaniques particulièrement bonnes.

Autrement, l'étape de chauffage du procédé selon l'invention peut être réalisée par la technique, également classique en elle-même, de pressage à chaud, ou thermomoulage à haute pression.

Le procédé selon l'invention peut être mis en œuvre à pression atmosphérique, ou à pression réduite.

Préférentiellement, les gaz se dégageant du matériau naturel lors de la phase de chauffage sont évacués en continu du dispositif utilisé. Ainsi, le procédé selon l'invention comprend de préférence, au cours de la phase de chauffage, et préférentiellement également au cours de la phase de refroidissement, une étape de dégazage en continu de l'enceinte contenant le matériau naturel sur lequel le procédé est mis en œuvre.

Préalablement à l'étape de chauffage, le procédé selon l'invention peut comprendre des étapes de nettoyage, triage et/ou dégraissage du matériau naturel, ainsi, le cas échéant, qu'une étape préalable de broyage de ce matériau naturel de sorte à assurer qu'il se présente sous une forme particulaire, et si nécessaire à la granulométrie souhaitée.

Préférentiellement, les particules du matériau naturel sous forme particulaire contenant des scléroprotéines, sur lesquelles est appliqué le procédé selon l'invention, présentent toutes un diamètre compris entre 20 et 500 µm, de préférence compris entre 100 et 500 µm.

Préférentiellement, ces particules présentent une bonne homogénéité de taille.

Ces particules présentent en outre de préférence une bonne homogénéité de forme, dont il est notamment possible de s'assurer par observation au microscope électronique.

Le procédé selon l'invention est cependant tout autant applicable aux matériaux naturels dont la taille des particules est supérieure à cette plage de valeurs, et y compris lorsque ces particules présentent un diamètre ou une longueur d'un ou plusieurs centimètres.

Dans des modes de mise en œuvre particuliers de l'invention, la compression est réalisée, au moins durant l'étape de chauffage, à une pression comprise entre 30 et 100 MPa, par exemple d'environ 50 MPa.

Durant l'étape de refroidissement, il est de préférence appliqué une compression du matériau à la même pression que durant l'étape de chauffage. Cette pression peut autrement être inférieure, ou bien être supérieure.

Un maintien de la compression du matériau pendant l'étape de refroidissement, et particulièrement dans la plage de valeurs définie ci-dessus, permet avantageusement de limiter la porosité dans la matière finale obtenue, et par voie de conséquence la quantité d'eau contenue dans cette matière. Il en résulte des propriétés de solidité mécanique et structurelle particulièrement bonnes pour la matière obtenue à l'issue de la mise en œuvre du procédé selon l'invention.

Dans des modes de mise en œuvre particuliers de l'invention, la phase de chauffage du matériau naturel à une température supérieure ou égale à la température de dénaturation des scléroprotéines est mise en œuvre pendant une durée suffisante pour assurer que l'intégralité du matériau naturel soumis à chauffage ait atteint une température supérieure ou égale à la température de dénaturation des scléroprotéines. Une durée de la phase de chauffage comprise entre 1 et 45 minutes permet de l'assurer quelles que soient les dimensions de la pièce à former, et notamment son épaisseur.

En fonction de l'épaisseur de la pièce, cette durée de la phase de chauffage peut par exemple être comprise entre 1 et 20 minutes.

Le matériau naturel sous forme particulaire contenant des scléroprotéines sur lequel est mis en œuvre le procédé selon l'invention présente de préférence un taux d'humidité compris entre 0 et 20 %, par exemple d'environ 12 %. L'invention s'applique cependant également à des matériaux naturels de taux d'humidité supérieur, notamment aussi élevé que 65 %.

On définit ici le taux d'humidité, de manière classique en elle-même, comme le pourcentage en masse d'eau contenue dans le matériau, par rapport à la masse totale du matériau, dans des conditions de 60 % d'humidité relative de l'air et à 20 °C environ. Ce taux d'humidité peut notamment être déterminé par comparaison du poids d'un échantillon du matériau avec le poids de ce même échantillon après qu'il ait été soumis à une étape de séchage à plus de 100 °C jusqu'à obtenir un poids de l'échantillon sensiblement constant.

Le cas échéant, le procédé selon l'invention peut comprendre une étape préalable de séchage du matériau naturel, pour obtenir le taux d'humidité souhaité.

Préalablement à la mise en œuvre de la phase de chauffage, le procédé selon l'invention peut comprendre une étape de mélange du matériau naturel sous forme particulaire avec un ou plusieurs additifs, choisis en fonction des propriétés souhaitées pour la pièce finale. Des exemples non limitatifs de tels additifs sont les agents plastifiants, les fibres de renfort, les colorants, etc.

Dans des modes de mise en œuvre particuliers de l'invention, le matériau naturel n'est mélangé à aucun autre composant pour la mise en œuvre du procédé selon l'invention.

Dans d'autres modes de mise en œuvre particuliers de l'invention, préalablement à la mise en œuvre de la phase de chauffage, le procédé selon l'invention comprend une étape de mélange du matériau naturel sous forme particulaire avec un ou plusieurs additifs, ces additifs étant présents dans le mélange dans une quantité inférieure à 10 % en poids, de préférence inférieure à 5 % en poids, par rapport au poids total du mélange.

Des additifs particulièrement préférés dans le cadre de l'invention sont les agents plastifiants, tels que le glycérol ou l'eau (l'eau étant mise en œuvre, en tant qu'additif, pour augmenter le taux d'humidité du matériau naturel), et les substances colorantes, tels que les pigments, par exemple l'oxyde de fer.

Le matériau naturel peut par exemple être issu de corne, de sabot, d'onglon, de laine, de soie, de poil, par exemple de cachemire, de plume ou de cuir, d'animaux.

Pour la mise en œuvre des phases du procédé selon l'invention, le matériau naturel peut être dopé par une ou plusieurs substances, telles que des scléroprotéines, qui ont été isolées, notamment par extraction chimique, à partir de ce matériau naturel ou d'un autre type de matériaux naturels. Le matériau naturel peut ainsi par exemple être dopé par du collagène extrait de tissus animaux.

Les scléroprotéines qui y sont contenues sont par exemple essentiellement des scléroprotéines kératiniques ou des protéines collagéniques

Le procédé selon l'invention s'avère particulièrement avantageux pour la fabrication d'une pièce à partir d'un matériau naturel sous forme particulaire contenant des protéines issu de corne de mammifère, par exemple de corne de vache, ou issu de cuir d'animal non humain.

Une pièce obtenue par un procédé de fabrication selon l'invention répond à l'une ou plusieurs des caractéristiques décrites ci-avant.

La matière qui constitue cette pièce présente une plus faible hygroscopie, c'est-à-dire une plus faible tendance à absorber l'humidité de l'air, que le matériau naturel initial. Ainsi, dans des conditions d'humidité relative de l'air et de température identiques, le taux d'humidité de la matière finale obtenue par le procédé selon l'invention, est plus faible que le taux d'humidité du matériau naturel initial.

Dans des modes de réalisation particuliers, la matière qui constitue cette pièce présente un taux d'humidité compris entre 0 et 20 %, de préférence inférieure à 10 %, et préférentiellement inférieur à 5 %, dans des conditions de 60 % d'humidité relative de l'air et à une température de 20 °C.

Cette pièce peut notamment avoir été obtenue par mise en œuvre du procédé selon l'invention à partir de matériau naturel à base de scléroprotéines de toute origine animale non humaine.

Elle peut notamment avoir été obtenue par mise en œuvre du procédé selon l'invention sur un matériau issu de corne de mammifère, ou encore sur un matériau issu de cuir d'animal non humain.

Sa masse volumique est supérieure à celle du matériau naturel initial. Dans le cas où elle a été obtenue à partir de corne de mammifère, et notamment de corne de vache, elle présente de préférence une masse volumique supérieure ou égale à 1,30 g/cm³.

Une pièce obtenue par le procédé selon l'invention, répondant à l'une ou plusieurs des caractéristiques ci-avant, peut être utilisée pour la fabrication d'un article de lunetterie, de bijouterie ou de l'art de la table, notamment en tant que manche de couvert.

Plus généralement, la pièce obtenue par le procédé selon l'invention est particulièrement adaptée à la fabrication d'objets et accessoires de luxe, d'horlogerie, de joaillerie, etc.

Elle peut également être utilisée pour la fabrication d'articles de marqueterie, ou encore pour l'ornement d'armes de tir ou de chasse, ou pour toute autre application souhaitée.

Les caractéristiques et avantages de l'invention apparaîtront plus clairement à la lumière des exemples de mise en œuvre ci-après, fournis à simple titre illustratif et nullement limitatifs de l'invention, avec l'appui des figures 1 à 9, dans lesquelles :
- la figure 1 montre un graphe représentant la température de dénaturation des protéines contenues dans un échantillon de corne de vache en fonction de son taux d'humidité, mesurée par calorimétrie différentielle à balayage ;
- la figure 2 montre un graphe représentant les résultats de l'analyse mécanique dynamique (module de Young et tan δ) en fonction de la température, d'un matériau obtenu par moulage uniaxial haute pression de corne de vache à 200 °C et 100 MPa ;

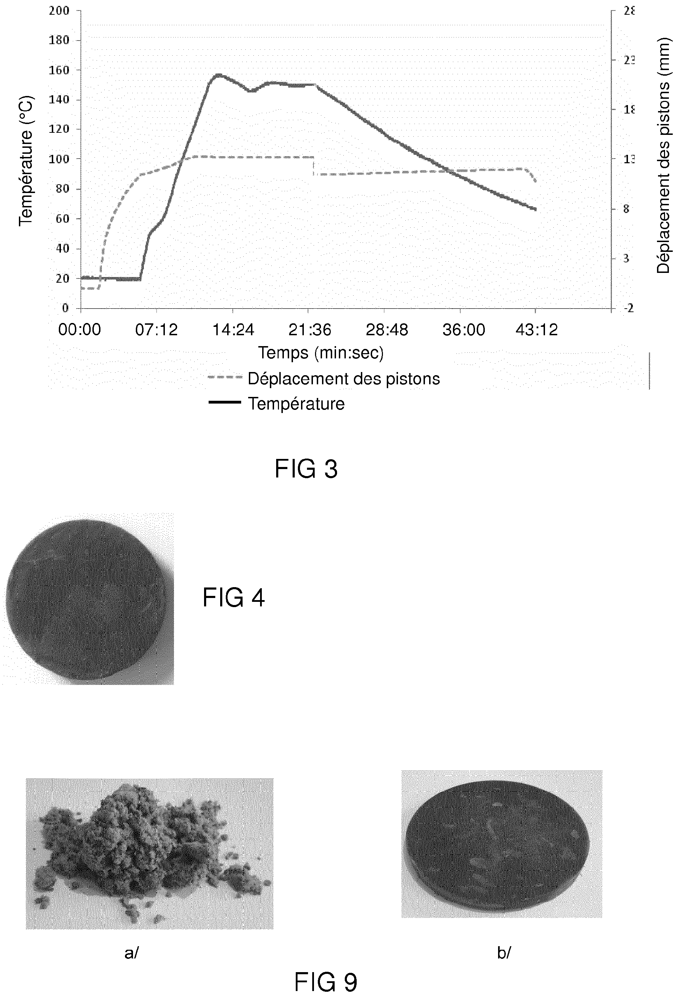

- la figure 3 montre un graphe représentant, en fonction du temps, la température et la compression appliquées lors de la mise en œuvre d'un procédé de frittage flash conforme à l'invention à partir de poudre de corne de vache, la pression étant exprimée en terme de déplacement des pistons du dispositif de frittage flash ;

- la figure 4 montre une photographie d'une pastille obtenue par un procédé de frittage flash conforme à l'invention à partir de poudre de corne de vache ;

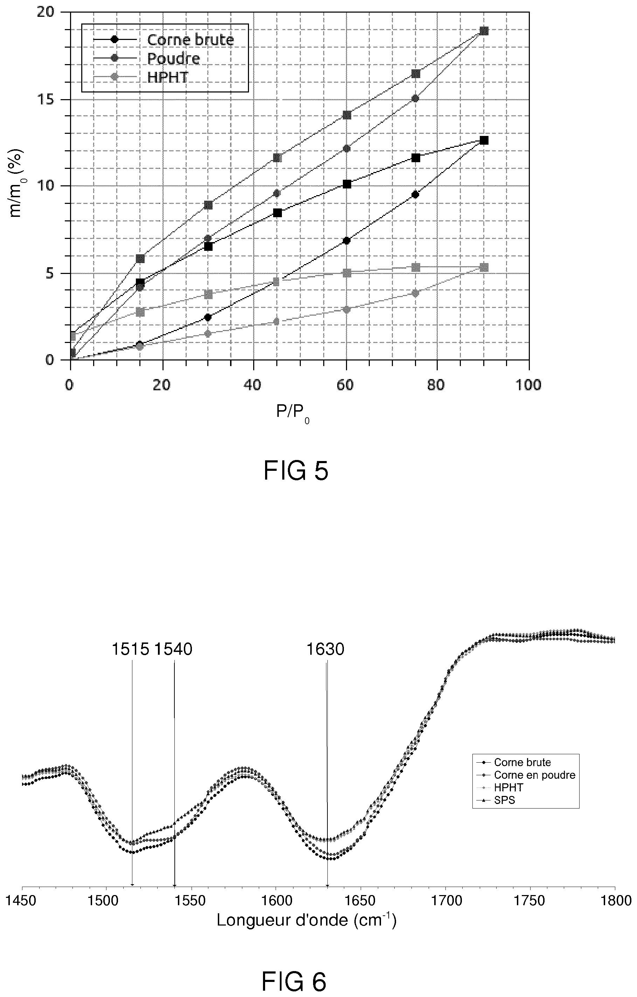

- la figure 5 montre un graphe représentant les isothermes d'adsorption d'eau pour de la corne de vache brute (« Corne brute »), cette corne de vache après broyage (« Poudre »), et le matériau obtenu à partir de cette poudre par un procédé de thermomoulage à haute pression conforme à l'invention (« HPHT ») ;
- la figure 6 montre les spectres obtenus par spectroscopie infrarouge FTIR pour de la corne de vache brute (« Corne brute »), cette corne de vache après broyage (« Corne en poudre »), le matériau obtenu à partir de cette poudre par un procédé de frittage flash conforme à l'invention (« SPS ») et le matériau obtenu à partir de cette poudre par un procédé de thermomoulage à haute pression conforme à l'invention (« HPHT ») ;

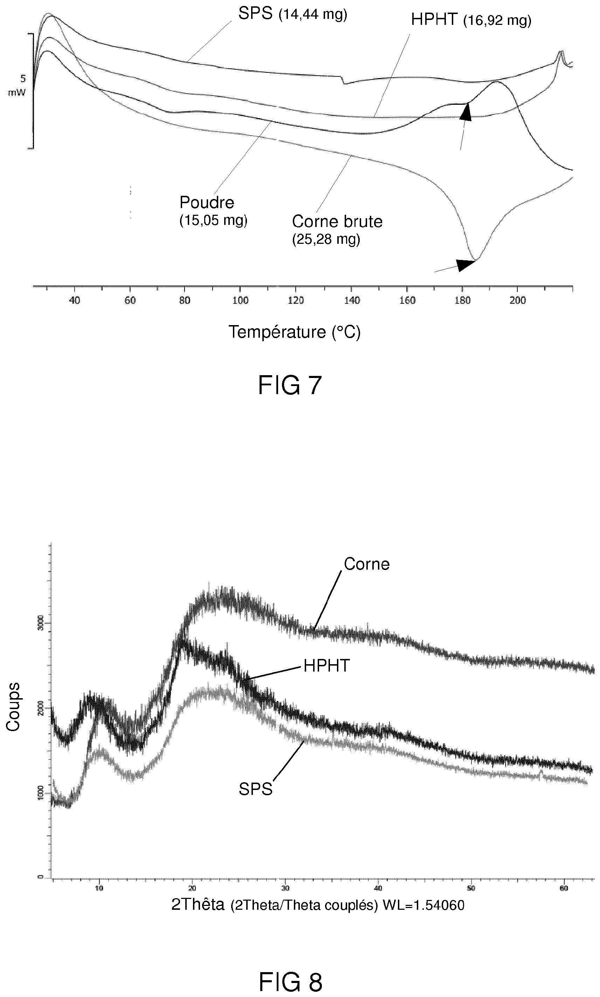

- la figure 7 montre un graphe représentant, pour de la corne de vache brute (« Corne brute »), cette corne de vache après broyage (« Poudre »), le matériau obtenu à partir de cette poudre par un procédé de frittage flash conforme à l'invention (« SPS ») et le matériau obtenu à partir de cette poudre par un procédé de thermomoulage à haute pression conforme à l'invention (« HPHT »), la variation d'énergie en fonction de la température, mesurée par calorimétrie différentielle à balayage ;
- la figure 8 montre un diagramme de diffraction des rayons X obtenu pour de la corne de vache brute (« Corne »), le matériau obtenu à partir de cette poudre par un procédé de frittage flash conforme à l'invention (« SPS ») et le matériau obtenu à partir de cette poudre par un procédé de thermomoulage à haute pression conforme à l'invention (« HPHT ») ;
- et la figure 9 représente des photographies a/ d'un échantillon de cuir d'animal non-humain sous forme particulaire, et b/ d'une pièce obtenue à partir de cet échantillon par un procédé de frittage flash conforme à l'invention.

### A/ Mise en œuvre du procédé sur de la poudre de corne de vache

Les exemples ci-après sont mis en œuvre à partir de corne de vache d'Aubrac.

La corne naturelle est préalablement soumise à une étape de broyage, pour former une poudre de corne dont les particules présentent un diamètre compris entre 200 et 500 µm.

La densité de la corne brute est de 1,28 ± 0,01 g/cm³.

La courbe représentant la température de dénaturation des protéines contenues dans cette poudre de corne de vache, en fonction du taux d'humidité de la poudre, est établie par calorimétrie différentielle à balayage (DSC) au moyen d'un instrument DSC1 (Mettler-Toledo), avec des capsules en acier moyenne pression de 80 µL, à 10 °C/min.

Le résultat obtenu est montré sur la figure 1.

On observe par exemple qu'à un taux d'humidité de 9,6 % (ce taux pouvant être obtenu après séchage de la corne à 40 °C), la température de dénaturation des protéines est d'environ 185 °C.

Par ailleurs, la température de transition vitreuse des protéines dénaturées est déterminée par analyse mécanique dynamique (DMA), au moyen d'un appareil Tritec 2000 DMA (Triton Technology Ltd), simple encastrement, 2 °C/min.

A cet effet, la poudre de corne à un taux d'humidité de 11,7 % est soumise à moulage uniaxial haute pression, à 200 °C et 100 MPa pendant 3 min, au moyen d'un instrument MAPA 50 (Pinette Emidecau Industries), dans un moule carré de 5 cm de côté.

La température de transition vitreuse du matériau (corne reconstituée) ainsi obtenu est mesurée par analyse mécanique dynamique.

Le résultat obtenu est montré sur la figure 2.

On relève que la température de transition vitreuse du matériau, après dénaturation des protéines qui le constituent, est de 95 °C.

Le matériau mis en œuvre pour les expériences ci-après présente un taux d'humidité de 11,7 % à 60 % d'humidité relative de l'air et une température de 20 °C. A ce taux d'humidité, la température de dénaturation des protéines est de 181 °C à la pression atmosphérique

### Exemple 1 - Procédé par frittage flash

Un procédé selon l'invention est mis en œuvre pour la fabrication d'une pièce cylindrique de 160 mm de diamètre et 22 mm de hauteur, à partir de la poudre de corne.

L'outillage utilisé consiste en une matrice et des pistons en graphite. Les dimensions de la matrice sont les suivantes :
- diamètre extérieur : 230 mm
- diamètre intérieur : 160 mm.

L'alésage intérieur de la matrice est recouvert d'une feuille de graphite souple, dont la fonction est d'assurer l'étanchéité du montage, et d'éviter le grippage entre la matrice et les pistons. Une feuille de graphite est également positionnée sur les surfaces des pistons en contact avec la poudre, pour éviter que le matériau fritté ne colle aux pistons.

La quantité de poudre désirée est introduite dans la matrice, qui est ensuite fermée par les deux pistons. L'ensemble est alors disposé dans l'enceinte du dispositif de frittage flash (Sumitomo Sinter 2000), qui est mise sous pression réduite, à 5-10 Pa. Le dispositif est alors programmé pour appliquer sur la matrice contenant la poudre une compression à une pression de 32 MPa en 4 min.

Simultanément, l'ensemble est chauffé par effet Joule par un courant électrique traversant les pistons et passant par les parois de la matrice en graphite. L'ensemble est porté à 150 °C en 7 min. Le contrôle de la température étant réalisé grâce à un thermocouple inséré sur la paroi extérieure de la matrice. A cette température, à cette pression réduite, les protéines entrant dans la constitution de la poudre subissent le phénomène de dénaturation.

La température est maintenue à 150 °C pendant 10 min, à la suite de quoi le chauffage est coupé. La compression est maintenue jusqu'à ce que la température à l'intérieur de la matrice atteigne une valeur de 70 °C, inférieure à la température de transition vitreuse des protéines dénaturées. Le dispositif est alors ouvert, et la pièce formée est ôtée de la matrice.

La figure 3 montre les profils de température et de compression de la matrice contenant le matériau, qui sont appliqués en fonction du temps (le profil de compression étant exprimé en termes de déplacement des pistons).

On observe qu'après 10 min de maintien de la température dans la matrice à 150 °C, la température diminue progressivement. Parallèlement, la compression exercée sur la matrice est sensiblement constante, le déplacement des pistons, de quelques millimètres, étant dû aux changements d'état de la matière à l'intérieur de la matrice.

A l'issue du procédé, on obtient une pastille de corne densifiée de la forme souhaitée, d'une couleur noire intense. Cette pièce est montrée sur la figure 4.

### Exemple 2 - Procédé par thermomoulage à haute pression (HPHT)

Le dispositif utilisé est un instrument MAPA 50 (Pinette Emidecau Industries).

La poudre est placée dans un moule rectangulaire de dimensions 5 x 1 cm, à une température de 200 °C, supérieure à la température de dénaturation des protéines. Elle est ensuite comprimée, à cette température, à une pression de 100 MPa, pendant 5 min. L'ensemble est ensuite refroidi à une température de 90 °C, inférieure à la température de transition vitreuse des protéines dénaturées, toujours sous compression, avant démoulage.

Le matériau obtenu à l'issue du procédé est foncé, et plus dense que la corne brute initiale : la densité de ce matériau est de 1,31 ± 0,02 g/cm³.

### Exemple 3 - Caractérisations des matériaux

### Isothermes d'adsorption d'eau

Les isothermes d'adsorption d'eau sont établis par la technique de sorption dynamique de vapeur (DVS), au moyen d'un instrument DVS Advantage (Surface Measurements Systems), à 5% à 95% d'humidité relative, avec un intervalle de 10% et à 25 °C, pour : la corne de vache brute (morceau de corne d'environ 300 mg), la même corne après broyage (diamètre des particules compris entre 200 et 500 µm), et le matériau obtenu par un procédé HPHT conforme à l'invention à l'Exemple 2 ci-dessus.

Les résultats obtenus sont montrés sur la figure 5.

On y observe très nettement une augmentation de l'hygroscopie de la corne native après broyage. Ceci est lié principalement à l'augmentation de la surface spécifique du matériau.

Puis, après transformation par thermomoulage à haute pression conformément à la présente invention, on constate l'effet inverse. La dénaturation des scléroprotéines a provoqué une nette diminution de l'hygroscopie (3 % d'eau adsorbée à 60% d'humidité relative, contre 7% pour la corne brute naturelle par exemple). Ceci pourrait être dû au déploiement en surface d'acides aminés plus hydrophobes lors de la modification des structures secondaires des scléroprotéines induite par le procédé selon l'invention.

### Spectroscopie infrarouge

Une analyse par spectroscopie infrarouge à transformée de Fourier (FTIR) est réalisée, au moyen d'un instrument Spectrum 65 (PerkinElmer), pour : la corne de vache brute, la même corne après broyage, le matériau obtenu par un procédé de frittage flash (SPS) conforme à l'invention à l'Exemple 1 ci-dessus et le matériau obtenu par un procédé HPHT conforme à l'invention à l'Exemple 2 ci-dessus.

Les résultats obtenus sont montrés sur la figure 6.

On observe sur cette figure une modification de la fréquence de vibration de la bande amide I : 1633 cm⁻¹ pour la corne native et 1627 cm⁻¹ pour la corne après traitement SPS et 1628 cm⁻¹ pour la corne après traitement HPHT. Cette modification est caractéristique de la modification de la structure secondaire de la kératine lors de la mise en œuvre du procédé selon l'invention.

La bande amide II (autour de 1530 cm⁻¹) est, quant à elle, plutôt relative à l'environnement des groupements N-H, et la baisse de l'intensité observée à 1540 cm⁻¹ pourrait être relative à une diminution des liaisons hydrogènes de ces groupements après transformation par le procédé selon l'invention.

### Analyses DSC

Pour chacun des matériaux suivants : corne brute (sous forme d'un morceau d'environ 20 mg), la même corne après broyage (diamètre des particules compris entre 200 et 500 µm), le matériau obtenu par un procédé SPS conforme à l'invention à l'Exemple 1 ci-dessus et le matériau obtenu par un procédé HPHT conforme à l'invention à l'Exemple 2 ci-dessus, il est procédé à une analyse par calorimétrie différentielle à balayage (DSC) au moyen d'un instrument DSC1 (Mettler-Toledo), avec des capsules en acier moyenne pression de 80 µL, à 10 °C/min.

On obtient pour chaque matériau la courbe représentant la variation d'énergie en fonction de la température montrée sur la figure 7.

Ces résultats confirment que les pics matérialisant le phénomène endothermique associé à la dénaturation des protéines, présents sur les courbes pour les échantillons de corne non traitée (ces pics étant indiqués par des flèches sur la figure) n'apparaissent pas sur les courbes des échantillons obtenus après traitement de la corne par un procédé selon l'invention. Ceci confirme que les protéines contenues dans les matériaux obtenus par des procédés conformes à l'invention ont bien toutes été dénaturées lors de la mise en œuvre de ces procédés.

### Analyse de diffraction des rayons X

Pour chacun des matériaux suivants : corne brute (sous forme d'un morceau d'environ 20 mg), le matériau obtenu par un procédé SPS conforme à l'invention à l'Exemple 1 ci-dessus et le matériau obtenu par un procédé HPHT conforme à l'invention à l'Exemple 2 ci-dessus, il est procédé à une analyse de diffraction des rayons X (DRX) au moyen d'un instrument Bruker D8 Advance.

On obtient pour chaque matériau la courbe le diagramme montré sur la figure 8.

L'absence de pics de diffraction sur ces diagrammes, et la seule présence d'un signal de diffusion lié à la structure particulière de la corne, démontrent que la matière finale obtenue par la procédé selon l'invention est principalement amorphe.

Par ailleurs, des expériences d'absorption / désorption d'azote montrent que la structure physique des matières obtenues tant par le procédé SPS que par le procédé HPHT, mis en œuvre conformément à l'invention, se rapproche de celle d'une matrice élastique avec différents réseaux de porosité (micro/méso/macroscopiques) communicants. L'observation de ces matières au microscope optique et au microscope électronique à balayage confirme cette hypothèse.

### Exemple 4 - Exemple comparatif

De la corne de vache d'Aubrac sous forme de poudre dont les particules présentent un diamètre de 250 µm, présentant un taux d'humidité de 0 %, est mise en œuvre dans cet exemple.

La température de dénaturation des protéines contenues dans cette poudre de corne, mesurée par DSC, est supérieure à 240 °C.

La poudre est soumise à un procédé par thermomoulage à haute pression, selon les conditions décrites dans l'Exemple 2 ci-avant, mais avec une température de chauffage de 220 °C, 225 °C ou 230 °C, inférieure à la température de dénaturation des protéines.

Pour chacune des températures testées, on obtient à l'issue de ce procédé un bloc de poudre compressée, dont la densité n'est pas supérieure à celle de la poudre initiale, et de faible degré de cohésion.

### B/ Mise en œuvre du procédé sur du cuir

Ces exemples sont mis en œuvre à partir de cuir issu de dérayure, sous forme de fibre broyée dont la granulométrie se situe entre 100 et 250 µm.

La figure 9 montre, en a/, une photographie du matériau naturel de départ.

### Exemple 5

Ce matériau est soumis à un procédé par frittage flash conforme à l'invention. Le protocole opératoire est similaire à celui décrit dans l'Exemple 1 ci-avant, à l'exception du fait que la température de chauffage est de 140 °C. Dans les conditions appliquées, les scléroprotéines contenues dans le matériau initial sont dénaturées.

On obtient à l'issue du procédé la pièce montrée en b/ sur la figure 9. Cette pièce présente l'aspect du cuir naturel, et des propriétés améliorées par rapport au matériau naturel de départ.

### Exemple 6

Le taux d'humidité du matériau mis en œuvre dans cet exemple est compris entre 15 et 20 %. A un tel taux d'humidité, la température de dénaturation des scléroprotéines est mesurée à 140 °C. La densité de ce matériau pulvérulent est comprise entre 0,1 et 0,5 g/cm³.

La poudre est soumise à un procédé par thermomoulage à haute pression, selon les conditions décrites dans l'Exemple 2 ci-avant, mais avec une température de chauffage de 65 °C ou 110 °C, inférieure à la température de dénaturation des protéines, ou avec une température de chauffage de 150 °C, supérieure à la température de dénaturation des protéines.

Pour l'échantillon traité à 150 °C, conformément à l'invention, on obtient un bloc solide compact et plus dense que le matériau naturel initial, plus particulièrement de densité comprise entre 1,1 et 1,3 g/cm³. Le matériau obtenu présente de bonnes propriétés mécaniques, tant en flexion qu'en traction. Son module de flexion est par exemple compris entre 1600 et 2500 MPa.

Pour chacune des températures de 65 °C et 110 °C, on obtient par contre, à l'issue du procédé, un bloc de faible cohérence, dont se détachent des morceaux, et dont les propriétés mécaniques sont bien inférieures à celles de la pièce obtenue conformément à l'invention. En particulier, la valeur du module de flexion, traduisant la solidité et la rigidité de la pièce, est plus de 4 fois plus faible que celle obtenue pour la pièce traitée conformément à l'invention (module de flexion compris entre 350 et 450 MPa).

### Exemple 7 - Exemple comparatif

La poudre de taux d'humidité de 15 % est placée dans le dispositif de thermomoulage à haute pression et traitée à une température de 170 °C, supérieure à la température de dénaturation des protéines, sous compression à une pression de 81 MPa, pendant 5 min. La compression est ensuite stoppée, et l'ensemble est refroidi par dissipation jusqu'à une température de 90 °C, avant démoulage.

On obtient une pièce dont la densité est inférieure à celle du matériau initial.

### Exemple 8

Cet exemple est mis en œuvre à partir de cuir ayant subi un tannage végétal, sous forme de poudre de densité 0,2 g/cm³, dont la granulométrie est comprise entre 500 et 1000 µm.

La poudre est placée dans un moule à une température de 150 °C, supérieure à la température de dénaturation des protéines. Elle est comprimée, à cette température, à une pression de 81 MPa, pendant 4 min. L'ensemble est ensuite refroidi à une température de 90 °C, inférieure à la température de transition vitreuse des protéines dénaturées, toujours sous la même compression, avant démoulage.

La matière obtenue est broyée et analysée par spectrométrie infrarouge à transformée de Fourier au moyen d'un spectromètre muni d'un système ATR (réflectance totale atténuée) à pointe diamant.

Par rapport au spectre réalisé dans les mêmes conditions pour le matériau initial, on observe une diminution importante du pic à 1661 cm⁻¹, correspondant aux hélices α dans la zone caractéristique de l'amide I. Ceci traduit une diminution de la quantité d'hélices α dans la structure des scléroprotéines de 48 % pour le matériau initial à 12 % pour la matière finale, témoignant du fait que la dénaturation des scléroprotéines a bien été réalisée.

On n'observe en outre l'apparition d'aucun nouveau pic sur le spectre obtenu pour la matière finale, par rapport au matériau initial, ce qui démontre qu'il n'y a eu formation ou apparition d'aucun composé durant la mise en œuvre du procédé selon l'invention : le traitement selon l'invention a bien modifié la structure secondaire des scléroprotéines sans les dégrader.

Une analyse DSC de la matière obtenue montre en outre que, par rapport au matériau initial, l'aire du pic endothermique associé à la dénaturation thermique des scléroprotéines a diminué de manière significative.

### C/ Mise en œuvre du procédé sur d'autres matériaux naturels

Dans tous ces exemples, il est mis en œuvre un dispositif de thermomoulage à haute pression MAPA 50 (Pinette Emidecau Industries). Le matériau naturel sous forme granulaire est placé dans le dispositif dans un moule rectangulaire de dimensions 5 x 1 cm.

### Exemple 9 - Corne en éclat

10 g de corne de vache sous forme d'aiguilles de 2 à 4 cm de long, de protéine majoritaire la kératine α, de taux d'humidité 11 % (température de dénaturation des scléroprotéines 180 °C), sont soumises à un procédé par thermomoulage à haute pression, à une température de 210 °C, supérieure à la température de dénaturation des protéines, sous compression à une pression de 92 MPa, pendant 210 s. L'ensemble est ensuite refroidi à une température de 90 °C, inférieure à la température de transition vitreuse des protéines dénaturées, toujours sous compression, avant démoulage. La pièce obtenue à l'issue du procédé est plus dense que le matériau initial, elle est compacte et de surface lisse.

### Exemple 10 - Plume

8 g de morceaux de plume de canard grossièrement coupés sous forme de morceaux de 2 à 4 cm, de protéine majoritaire la kératine (température de dénaturation des scléroprotéines 180 °C), sont soumis à un procédé par thermomoulage à haute pression, à une température de 210 °C, supérieure à la température de dénaturation des protéines, sous compression à une pression de 92 MPa, pendant 150 s. L'ensemble est ensuite refroidi à une température de 90 °C, inférieure à la température de transition vitreuse des protéines dénaturées, toujours sous compression, avant démoulage. La pièce obtenue à l'issue du procédé est plus dense que le matériau initial, elle est compacte et de surface lisse.

### Exemple 11 - Cachemire

10 g de fibres de cachemire de chèvre de 2 à 4 cm de long, de protéine majoritaire la kératine α, de taux d'humidité 70 % (température de dénaturation des scléroprotéines 110 °C) sont soumis à un procédé par thermomoulage à haute pression, à une température de 150 °C, supérieure à la température de dénaturation des protéines, sous compression à une pression de 46 MPa, pendant 210 s. L'ensemble est ensuite refroidi à une température de 90 °C, inférieure à la température de transition vitreuse des protéines dénaturées, toujours sous compression, avant démoulage. La pièce obtenue à l'issue du procédé est plus dense que le matériau initial, elle est compacte et de surface lisse. Il s'est produit une vitrification du matériau initial.

### Exemple 12 - Soie entière

10 g de morceaux de soie de 1 cm², de protéine majoritaire la fibroïne, de taux d'humidité 60 %, sont soumis à un procédé par thermomoulage à haute pression, à une température de 230 °C, supérieure à la température de dénaturation des protéines, sous compression à une pression de 50 MPa, pendant 210 s. L'ensemble est ensuite refroidi à une température de 90 °C, inférieure à la température de transition vitreuse des protéines dénaturées, toujours sous compression, avant démoulage. La pièce obtenue à l'issue du procédé est plus dense que le matériau initial, elle est compacte et de surface lisse.

### Exemple 13 - Soie défibrée

10 g de fibres de soie de 2 à 4 cm de long, de taux d'humidité 60 %, sont soumis à un procédé par thermomoulage à haute pression, à une température de 230 °C, supérieure à la température de dénaturation des protéines, sous compression à une pression de 59 MPa, pendant 210 s. L'ensemble est ensuite refroidi à une température de 90 °C, inférieure à la température de transition vitreuse des protéines dénaturées, toujours sous compression, avant démoulage. La pièce obtenue à l'issue du procédé est bien plus dense que le matériau initial, elle est compacte et de surface lisse.

### Exemple 14 - Laine

10 g de morceaux de laine de 2 à 4 cm de long, de protéine majoritaire la kératine α, de taux d'humidité 11 % (température de dénaturation des scléroprotéines 130 °C) sont soumis à un procédé par thermomoulage à haute pression, à une température de 150 °C, supérieure à la température de dénaturation des protéines, sous compression à une pression de 50 MPa, pendant 210 s. L'ensemble est ensuite refroidi à une température de 90 °C, inférieure à la température de transition vitreuse des protéines dénaturées, toujours sous compression, avant démoulage. La pièce obtenue à l'issue du procédé est plus dense que le matériau initial, elle est compacte et de surface lisse.

## Revendications

1. Procédé de fabrication d'une pièce sous forme d'un bloc solide, à partir d'un matériau naturel sous forme particulaire contenant des scléroprotéines, **caractérisé en ce qu'**il comprend, réalisées à sec :
- une phase de chauffage dudit matériau naturel sous compression à une pression supérieure ou égale à 30 MPa, à une température supérieure ou égale à la température de dénaturation desdites scléroprotéines,
- et une phase de refroidissement du matériau ainsi obtenu, dit matériau dénaturé, jusqu'à une température inférieure à 100 °C, ladite compression à une pression supérieure ou égale à 30 MPa étant maintenue pendant au moins une partie de la phase de refroidissement.

2. Procédé selon la revendication 1, selon lequel la phase de refroidissement du matériau dénaturé est réalisée jusqu'à une température inférieure à la température de transition vitreuse dudit matériau dénaturé.

3. Procédé selon l'une quelconque des revendications 1 à 2, selon lequel ladite compression à une pression supérieure ou égale à 30 MPa est maintenue pendant au moins la moitié, de préférence pendant la totalité, de la phase de refroidissement.

4. Procédé selon l'une quelconque des revendications 1 à 3, selon lequel la phase de chauffage dudit matériau naturel est réalisée par frittage flash.

5. Procédé selon l'une quelconque des revendications 1 à 4, selon lequel la compression est réalisée à une pression comprise entre 30 et 100 MPa.

6. Procédé selon l'une quelconque des revendications 1 à 5, selon lequel la phase de chauffage dudit matériau naturel à une température supérieure ou égale à la température de dénaturation des scléroprotéines est mise en œuvre pendant une durée comprise entre 1 et 45 minutes.

7. Procédé selon l'une quelconque des revendications 1 à 6, selon lequel les particules dudit matériau naturel sous forme particulaire présentent un diamètre compris entre 20 et 500 µm.

8. Procédé selon l'une quelconque des revendications 1 à 7, selon lequel lesdites scléroprotéines sont des protéines kératiniques.

9. Procédé selon l'une quelconque des revendications 1 à 7, selon lequel ledit matériau naturel sous forme particulaire contenant des scléroprotéines est d'origine animale non humaine.

10. Procédé selon l'une quelconque des revendications 1 à 9, selon lequel ledit matériau naturel sous forme particulaire contenant des scléroprotéines est issu de corne de mammifère.

11. Procédé selon l'une quelconque des revendications 1 à 9, selon lequel ledit matériau naturel sous forme particulaire contenant des scléroprotéines est issu de cuir d'animal non-humain.

## Patentansprüche

1. Verfahren zur Herstellung eines Teils in Form eines festen Blocks aus einem natürlichen Material in Partikelform, das Skleroproteine enthält, **dadurch gekennzeichnet, dass** es trocken durchgeführt und Folgendes umfasst:
- eine Erwärmungsphase des natürlichen Materials unter Kompression bei einem Druck größer oder gleich 30 MPa, bei einer Temperatur größer oder gleich der Denaturierungstemperatur der Skleroproteine,
- und eine Abkühlphase des so erhaltenen Materials, bezeichnet als denaturiertes Material, bis zu einer Temperatur von weniger als 100 °C, wobei die Kompression bei einem Druck größer oder gleich 30 MPa während mindestens eines Teils der Abkühlphase aufrechterhalten wird.

2. Verfahren nach Anspruch 1, wobei die Abkühlphase des denaturierten Materials bis zu einer Temperatur unter der Glasübergangstemperatur des denaturierten Materials durchgeführt wird.

3. Verfahren nach einem der Ansprüche 1 bis 2, wobei die Kompression bei einem Druck größer oder gleich 30 MPa während mindestens der Hälfte der, vorzugsweise während der gesamten, Abkühlphase aufrechterhalten wird.

4. Verfahren nach einem der Ansprüche 1 bis 3, wobei die Erwärmungsphase des natürlichen Materials durch Flash-Sintern durchgeführt wird.

5. Verfahren nach einem der Ansprüche 1 bis 4, wobei die Kompression bei einem Druck zwischen 30 und 100 MPa durchgeführt wird.

6. Verfahren nach einem der Ansprüche 1 bis 5, wobei die Erwärmungsphase des natürlichen Materials auf eine Temperatur größer oder gleich der Denaturierungstemperatur der Skleroproteine für eine Dauer von 1 bis 45 Minuten durchgeführt wird.

7. Verfahren nach einem der Ansprüche 1 bis 6, wobei die Partikel des natürlichen Materials in Partikelform einen Durchmesser zwischen 20 und 500 µm aufweisen.

8. Verfahren nach einem der Ansprüche 1 bis 7, wobei die Skleroproteine Keratinproteine sind.

9. Verfahren nach einem der Ansprüche 1 bis 7, wobei das natürliche Material in Partikelform, das Skleroproteine enthält, nicht menschlichen tierischen Ursprungs ist.

10. Verfahren nach einem der Ansprüche 1 bis 9, wobei das natürliche Material in Partikelform, das Skleroproteine enthält, aus dem Horn eines Säugetiers stammt.

11. Verfahren nach einem der Ansprüche 1 bis 9, wobei das natürliche Material in Partikelform, das Skleroproteine enthält, aus dem Leder von nicht menschlichen Tieren stammt.

## Claims

1. Method for producing a part in the form of a solid block, from a natural material in particulate form containing scleroproteins, **characterized in that** it comprises, carried out dry:
- a phase of heating said natural material under compression at a pressure greater than or equal to 30 MPa, at a temperature greater than or equal to the denaturation temperature of said scleroproteins,
- and a phase of cooling the material thus obtained, referred to as denatured material, to a temperature less than 100 °C, said compression at a pressure greater than or equal to 30 MPa being maintained for at least a part of the cooling phase.

2. Method according to claim 1, wherein the phase of cooling the denatured material is carried out to a temperature less than the glass transition temperature of said denatured material.

3. Method according to any one of claims 1 to 2, wherein said compression at a pressure greater than or equal to 30 MPa is maintained for at least half, preferably for all, of the cooling phase.

4. Method according to any one of claims 1 to 3, wherein the phase of heating said natural material is carried out by spark plasma sintering.

5. Method according to any one of claims 1 to 4, wherein the compression is carried out at a pressure comprised between 30 and 100 MPa.

6. Method according to any one of claims 1 to 5, wherein the phase of heating said natural material at a temperature greater than or equal to the denaturation temperature of the scleroproteins is implemented for a duration comprised between 1 and 45 minutes.

7. Method according to any one of claims 1 to 6, wherein the particles of said natural material in particulate form have a diameter comprised between 20 and 500 µm.

8. Method according to any one of claims 1 to 7, wherein said scleroproteins are keratin proteins.

9. Method according to any one of claims 1 to 7, wherein said natural material in particulate form containing scleroproteins is of non-human animal origin.

10. Method according to any one of claims 1 to 9, wherein said natural material in particulate form containing scleroproteins comes from mammal horn.

11. Method according to any one of claims 1 to 9, wherein said natural material in particulate form containing scleroproteins comes from non-human animal leather.
